# EUROPÄISCHE PATENTSCHRIFT

(11) **EP 3 817 950 B1**
(45) Veröffentlichungstag und Bekanntmachung des Hinweises auf die Patenterteilung: **02.03.2022**
(21) Anmeldenummer: 19725977.3
(22) Anmeldetag: 21.05.2019
(51) Int. Cl.: B60R 11/00, B60Q 7/00, B60R 11/06, B60R 13/02

(54) **VERKLEIDUNGSELEMENT MIT AUFNAHME FÜR WARNDREIECK, HECKKLAPPE MIT VERKLEIDUNGSELEMENT UND KRAFTFAHRZEUG MIT EINER SOLCHEN HECKKLAPPE**
TRIM ELEMENT HAVING A RECEPTACLE FOR A WARNING TRIANGLE, TAILGATE HAVING A TRIM ELEMENT, AND MOTOR VEHICLE HAVING SUCH A TAILGATE
ÉLÉMENT D'HABILLAGE COMPRENANT UN LOGEMENT POUR UN TRIANGLE DE SIGNALISATION, HAYON COMPRENANT UN ÉLÉMENT D'HABILLAGE ET VÉHICULE AUTOMOBILE ÉQUIPÉ D'UN HAYON DE CE TYPE

(30) Priorität: 04.07.2018 DE 102018210988
(43) Veröffentlichungstag der Anmeldung: 12.05.2021
(73) Patentinhaber: AUDI AG, 85045 Ingolstadt (DE)
(72) Erfinder: GROH, Richard Philipp, 86669 Königsmoos (DE)
(86) Internationale Anmeldenummer: PCT/EP2019/063021
(87) Internationale Veröffentlichungsnummer: WO 2020/007527

(56) Entgegenhaltungen:
- DE-A1-102014 207 362
- DE-A1-102015 008 134
- DE-A1-102016 225 658
- DE-U1-202015 008 710

## Beschreibung

Die Erfindung betrifft ein Verkleidungselement gemäß dem Oberbegriff von Anspruch 1 für eine Heckklappe eines Kraftfahrzeugs, wobei in dem Verkleidungselement eine zu einer Fahrzeuginnenseite offene Aufnahme ausgebildet ist, in der ein in einer Hülle aufgenommenes Warndreieck unterbringbar oder untergebracht ist. Ferner betrifft die Erfindung eine Heckklappe mit einem solchen Verkleidungselement und ein Kraftfahrzeug mit einer derartigen Heckklappe.

Die Aufnahme weist dabei folgende Elemente auf:
einen Rückwandabschnitt mit wenigstens einem elastischen Klemmelement;
zwei vordere Begrenzungsabschnitte; und
einen Auflageabschnitt, wobei das Klemmelement, die vorderen Begrenzungsabschnitte und der Auflageabschnitt derart ausgebildet sind, dass sie bei untergebrachtem Warndreieck mit der Hülle formschlüssig oder/und kraftschlüssig in Verbindung stehen.

Ein Verkleidungselement mit den Merkmalen des Oberbegriffs von Anspruch 1 ist aus der DE 10 2016 225 658 A1 bekannt. Ferner ist das Vorsehen einer Aufnahme für ein Warndreieck in einer Heckklappe beispielsweise auch aus der DE 20 2015 008 710 U1 bekannt. Die dort beschriebene Aufnahme weist zwei vordere Begrenzungsabschnitte auf, die zur Fahrzeuginnenseite geneigt sind. Diese geneigte Ausgestaltung ist notwendig, um die mittels zweier Blattfedern, die im Rückwandabschnitt ausgebildet sind, festgeklemmte Hülle des Warndreiecks nach vorne kippen zu können, um den Eingriff mit den Blattfedern zu lösen. Ferner stehen die Blattfedern relativ weit in Richtung Fahrzeuginneres vor, dass durch die geneigte Anordnung der vorderen Begrenzungsabschnitt Raum bereitgestellt wird, um die Hülle an den Blattfedern vorbei noch oben aus der Aufnahme entnehmen zu können.

Bei derartigen Aufnahmen für das Warndreieck ist zu berücksichtigen, dass das Warndreieck bzw. dessen Hülle bei geschlossener Heckklappe üblicherweise nicht entnommen werden kann, außer man würde über die Rücksitzbank in Richtung der geschlossenen Heckklappe gelangen, um dort das Warndreieck aus der Aufnahme zu entnehmen. Vielmehr wird das Warndreieck aus seiner Aufnahme entnommen, wenn die Heckklappe geöffnet ist, wobei die Innenverkleidung der Heckklappe mit der darin vorgesehenen Aufnahme dann über Kopf einer Person angeordnet ist, insbesondere im Wesentlichen horizontal ausgerichtet ist.

Bei einer aus der DE 20 2015 008 710 U1 bekannten Aufnahme ist beim Entnehmen des Warndreiecks Kraft auf einen oberen Rand der Hülle auszuüben, der sehr nahe an der Heckklappenverkleidung liegt, wobei die Krafteinwirkung mittig zwischen den beiden Blattfedern angesetzt werden sollte. Dies erfolgt was üblicherweise durch das Einführungen von mehreren Fingern einer oder beider Hände einer betreffenden Person in den engen Spalt zwischen Hülle und Verkleidungselement. Das Entnehmen ist daher eher schwierig und mit der Gefahr verbunden, dass man sich an den Fingerspitzen, insbesondere Fingernägeln verletzen kann. Ferner benötigen die in Richtung des Fahrzeuginneren geneigten vorderen Begrenzungsabschnitte Bauraum und wirken sich nachteilig auf das im Kofferraum zur Verfügung stehende Ladevolumen aus.

Die der Erfindung zu Grunde liegende Aufgabe ist daher darin zu sehen, eine verbesserte, platzsparende Aufnahme für ein Warndreieck anzugeben, bei der das Warndreieck sicher gehalten ist und einfach entnommen werden kann.

Diese Aufgabe wird gelöst durch ein Verkleidungselement mit den Merkmalen des Patentanspruchs 1, durch eine Heckklappe mit den Merkmalen des Patentanspruchs 11 und durch ein Kraftfahrzeug mit den Merkmalen des Anspruchs 12. Vorteilhafte Ausgestaltungen mit zweckmäßigen Weiterbildungen sind in den abhängigen Patentansprüchen angegeben.

Es wird also ein Verkleidungselement für eine Heckklappe eines Kraftfahrzeugs vorgeschlagen, wobei in dem Verkleidungselement eine zu einer Fahrzeuginnenseite offene Aufnahme ausgebildet ist, in der ein in einer Hülle aufgenommenes Warndreieck unterbringbar oder untergebracht ist, wobei die Aufnahme aufweist: einen Rückwandabschnitt mit wenigstens einem elastischen Klemmelement; zwei vordere Begrenzungsabschnitte; und einen Auflageabschnitt; wobei das Klemmelement, die vorderen Begrenzungsabschnitte und der Auflageabschnitt derart ausgebildet sind, dass sie bei untergebrachtem Warndreieck mit der Hülle formschlüssig oder/und kraftschlüssig in Verbindung stehen, wobei der Rückwandabschnitt oberhalb des Klemmelements einen zur Fahrzeuginnenseite konkav gebogenen Führungsabschnitt aufweist, entlang dem die Hülle des Warndreiecks in die Aufnahme einführbar oder aus dieser entfernbar ist.

Der Führungsabschnitt bildet dabei einen im Wesentlichen kontinuierlichen Übergang zwischen der Aufnahme und dem restlichen Verkleidungselement, so dass die Hülle des Warndreiecks entlang des Führungsabschnitts einfach und geführt aus der Aufnahme entnommen werden kann.

Erfindungsgemäß weist die Aufnahme zwei seitliche Zentrierelemente auf, die jeweils einen bezogen auf eine Vertikalrichtung geneigten Einführabschnitt und einen sich an den Einführabschnitt anschließenden, im Wesentlichen in Vertikal verlaufenden Aufnahmeabschnitte aufweisen. Dabei können die beiden Einführabschnitte so ausgebildet sind, dass sie eine V-förmige, insbesondere trichterartige, seitliche Führung für die Hülle bilden.

Zwischen den seitlichen Aufnahmeabschnitten ist die Hülle des Warndreiecks seitlich formschlüssige oder/und kraftschlüssig gehalten. Wird das Warndreieck aus der Aufnahme entnommen, wird der seitliche Kontakt zu den Aufnahmeabschnitten gelöst und das Warndreieck ist seitlich zwischen den geneigten Einführabschnitten beweglich, so dass es einfacher entnommen werden kann. Im umgekehrten Fall, wenn das Warndreieck bzw. dessen Hülle in die Aufnahme eingeführt werden soll, führen die geneigten Einführabschnitte die Hülle in Richtung ihrer seitlich zentrierten Lage zwischen den beiden Aufnahmeabschnitten.

Der Auflageabschnitt kann zwei seitliche, in einem Abstand voneinander angeordnete Teilabschnitte aufweisen. Dabei kann der zwischen den beiden Teilabschnitten gebildete Abstand so ausgebildet sein, dass der Rückwandabschnitt zwischen den beiden Teilabschnitten eine Griffmulde bildet. Insbesondere ist der Abstand zwischen den beiden Teilabschnitten so groß bzw. so breit gewählt, dass eine Hand im Bereich der Griffmulde die Hülle ergreifen und in Richtung des Führungsabschnitts des Rückwandabschnitts bewegt werden kann. Durch das Bereitstellen einer solchen Griffmulde wird das Entnehmen des Warndreiecks bzw. seiner Hülle vereinfacht und die Verletzungsgefahr für Finger bzw. Fingernägel vermindert.

Das Klemmelement kann einstückig mit dem Rückwandabschnitt ausgebildet sein, wobei zwischen dem Klemmelement und dem Rückwandabschnitt Übergangsbereiche mit reduzierter Materialdicke angeordnet sind, derart, dass das Klemmelement unter Verformung der Übergangsabschnitte relativ zum Rückwandabschnitt beweglich ist. Durch diese Ausgestaltung des Klemmelements ist es möglich, dass das Warndreieck ohne zu Verkippen entlang des Rückwandabschnitts aus der Aufnahme entnommen oder in diese eingeführt werden kann, wobei das Klemmelement durch die Hülle zwischenzeitlich in Richtung des Rückwandabschnitts gedrückt wird unter Ausnutzung der Verformung der Übergangsbereich mit geringerer Materialdicke.

Die Aufnahme kann zwei Klemmelemente aufweisen. Dabei kann jedes Klemmelement oberhalb eines der beiden Teilabschnitte angeordnet sein. Das heißt, dass die Klemmelemente seitlich der Griffmulde angeordnet sind, was die Entnahme bzw. das Einführen der Hülle weiter vereinfacht.

Die vorderen Begrenzungsabschnitte können seitlich an der Aufnahme und mit einem Abstand zueinander angeordnet sein, derart, dass zwischen den beiden vorderen Begrenzungsabschnitten der Rückwandabschnitt oder die Hülle des in der Aufnahme untergebrachten Warndreiecks sichtbar ist. Hierdurch wird die Sichtbarkeit des Warndreiecks bzw. seiner Hülle verbessert, so dass es in einer Pannen- bzw. Unfallsituation schnell gefunden wird.

Die vorderen Begrenzungsabschnitte können auf ihrer der Hülle des Warndreiecks zugewandten Aufnahmeinnenfläche mehrere rippenartige Vorsprünge aufweisen. Hierdurch wird die Klemmwirkung zwischen den vorderen Begrenzungsabschnitten und den dem im Rückwandabschnitt vorgesehenen Klemmelement verbessert.

Das Klemmelement kann einen Rastabschnitt aufweisen, der bei untergebrachtem Warndreieck mit der Hülle, insbesondere mit einem oberen Rand der Hülle in Eingriff bringbar ist oder in Eingriff steht. Dabei drückt das Klemmelement bzw. drücken die Klemmelemente die Hülle des Warndreiecks in Richtung der vorderen Begrenzungsabschnitte und in Richtung der Teilabschnitte des Auflageabschnitts, so dass das Warndreieck klapperfrei in der Aufnahme gehalten ist.

Ferner wird eine Heckklappe für ein Kraftfahrzeug mit einem oben beschriebenen Verkleidungselement zur Lösung der zu Grunde liegenden Aufgabe vorgeschlagen.

Ein Kraftfahrzeug kann eine mit einer solchen Heckklappe bereitgestellt werden, wobei die in dem Verkleidungselement vorgesehene Aufnahme zur Fahrzeuginnenseite zugänglich ist.

Weitere Vorteile, Merkmale und Einzelheiten der Erfindung ergeben sich aus den Patentansprüchen, der nachfolgenden Beschreibung bevorzugter Ausführungsformen sowie anhand der Zeichnungen. Dabei zeigt:
- Fig. 1: eine vereinfachte, schematische Perspektivdarstellung eines Teilausschnitts eines Verkleidungselements mit Aufnahme und darin aufgenommenem Warndreieck;
- Fig. 2: eine vereinfachte, schematische Perspektivdarstellung des Verkleidungselements der Figur 1 mit Aufnahme ohne Warndreieck;
- Fig. 3: eine vereinfachte, schematische Draufsicht auf eine dem Fahrzeuginneren zugewandten Seite des Verkleidungselements mit Aufnahme und darin aufgenommenem Warndreieck;
- Fig. 4: eine vereinfachte, schematische Draufsicht auf eine vom Fahrzeuginneren abgewandten Seite des Verkleidungselements mit Aufnahme und darin aufgenommenem Warndreieck;
- Fig. 5: eine vereinfachte, schematische Draufsicht auf die vom Fahrzeuginneren abgewandten Seite des Verkleidungselements mit Aufnahme ohne Warndreieck;
- Fig. 6: in den Teilfiguren A) und B) vereinfachte Schnittansichten etwa entsprechend den Schnittlinien A-A und B-B der Figur 3.

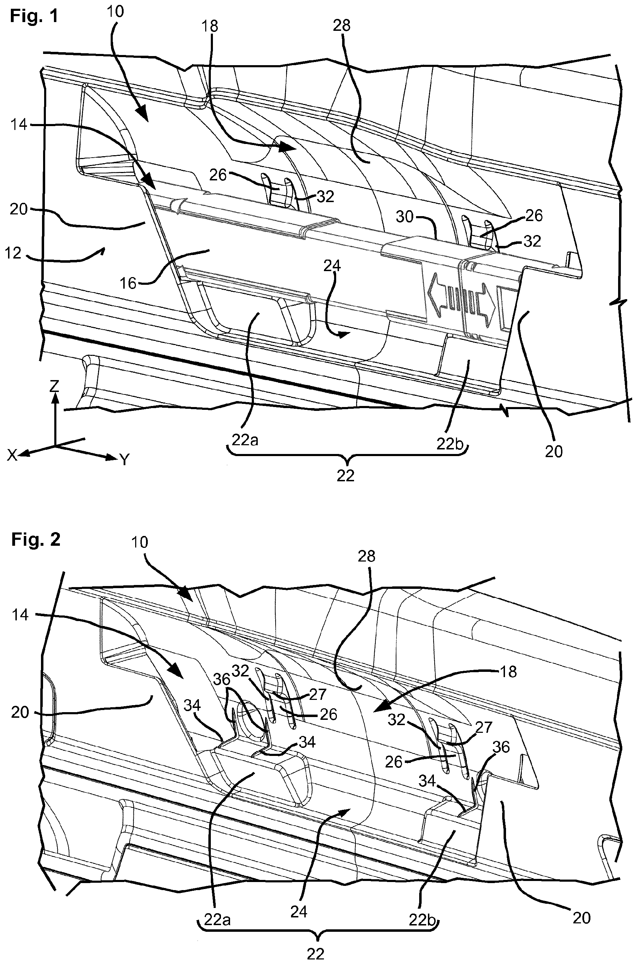

Figuren 1 und 2 zeigen in einer vereinfachten und schematischen Perspektivdarstellung einen Teilausschnitt eines Verkleidungselements 10 für eine nicht weiter dargestellte Heckklappe eine Kraftfahrzeugs. Das in der Figur 1 gezeigte Bezugskoordinatensystem zeigt eine Längsrichtung X, eine Querrichtung Y und eine Höhenrichtung Z, wobei sich diese Richtungsangaben insbesondere auf ein Kraftfahrzeug beziehen, in dem das Verkleidungselement 10 eingebaut ist. Bezogen auf einen eingebauten Zustand im Kraftfahrzeug zeigen die Figuren 1 und 2 eine Blickrichtung nach schräg hinten auf eine dem Fahrzeuginnenraum zugewandte Seite 12 des Verkleidungselements 10.

In dem Verkleidungselement 10 ist eine Aufnahme 14 vorgesehen. Die Aufnahme 14 ist dazu vorgesehen ein in einer Hülle 16 aufgenommenes Warndreieck (nicht sichtbar) aufzunehmen (Fig. 1). Es wird darauf hingewiesen, dass nachfolgend der Begriff Warndreieck auch stellvertretend für die Hülle 16 und mit gleichem Bezugszeichen verwendet werden kann.

Die Aufnahme 14 wird gebildet durch einen Rückwandabschnitt 18, zwei vordere Begrenzungsabschnitte 20 und einen Auflageabschnitt 22. Der Auflageabschnitt 22 ist in diesem Beispiel in zwei Teilabschnitte 22a, 22b aufgeteilt. Die sich links bzw. rechts seitlich befinden. Zwischen den beiden Teilabschnitten 22a, 22b ist ein Freiraum 24 gebildet, der ein Art Griffmulde bildet. Die Griffmulde 24 ist bezogen auf eine Ausdehnung der Aufnahme 14 in Querrichtung Y etwa mittig vorgesehen.

In dem Rückwandabschnitt 18 sind in der gezeigten Ausführungsform zwei Klemmelemente 26 vorgesehen. Die Klemmelemente 26 sind elastisch ausgebildet, so dass diese beim Einsetzen oder Herausnehmen der Hülle 16 des Warndreiecks verformbar sind. Der Rückwandabschnitt 18 weist oberhalb der Klemmelemente 26 einen zur Fahrzeuginnenseite konkav gebogenen Führungsabschnitt 28 auf. Entlang dieses Führungsabschnitts 28 kann das Warndreieck 16 in seine in Figur 1 dargestellte, aufgenommene Position eingeführt werden oder aus dieser Position entlang dem Führungsabschnitt 28 entnommen werden.

Die beiden Klemmelemente 26 stehen bei eingesetzter Hülle 16 mit einem oberen hinteren Rand 30 der Hülle 16 in Kontakt. Insbesondere weisen die Klemmelemente einen jeweiligen Rastabschnitt 27 auf, der an dem Rand 30 anliegt bzw. mit diesem in Eingriff steht. Hierdurch wird die Hülle in Höhenrichtung Z gesichert. Ferner üben die Klemmelemente 26 nach vorne bzw. unten wirkende Kräfte aus, so dass die Hülle gegen die vorderen Begrenzungsabschnitte 20 bzw. die Teilabschnitte 22a, 22b gedrückt wird. Das elastische Auslenken der Klemmelemente 26 wird insbesondere dadurch erreicht, dass zwischen den Klemmelementen 26 und dem Rückwandabschnitt 18 Übergangsbereiche 32 vorgesehen sind. Die Übergangsbereiche 32 weisen dabei eine geringere Materialdicke auf als der Rückwandabschnitt bzw. die Klemmelemente 26 selbst. Entsprechend können die Klemmelemente 26 auch durch elastisches Verformen der Übergangsbereiche 32 bezogen auf die Längsrichtung X nach vorne bzw. nach hinten bewegt bzw. ausgelenkt werden. Die Klemmelemente 26 sind mit dem Rückwandabschnitt 18 einstückig ausgebildet.

Aus der Figur 2 ist ferner ersichtlich, dass an den Teilabschnitten 22a, 22b rippenartige Vorsprünge 34 ausgebildet sein können, auf denen die Hülle 16 aufliegt. Auch im Rückwandabschnitt 18 können, insbesondere im Bereich der Vorsprünge 34 der Teilabschnitte 22a, 22b, rippenartige Vorsprünge 36 vorgesehen sein. Solche Rippenartigen Vorsprünge 34, 36 dienen insbesondere dazu, die Klemmwirkung auf die in der Aufnahme 14 aufgenommene Hülle 16 zu verbessern, wobei gleichzeitig die Reibung vermindert wird, verglichen mit einer vollflächigen Anlagen von Hülle 16 und beispielsweise Rückwandabschnitt 18, was insbesondere eine vereinfachte Entnahme des Warndreiecks bzw. der Hülle 16 unterstützt.

Aus der Zusammenschau der Figuren 1 und 2 ist auch ersichtlich, dass die vorderen Begrenzungsabschnitte 20 seitlich an der Aufnahme 14 und mit einem Abstand zueinander angeordnet sind, so dass zwischen den beiden vorderen Begrenzungsabschnitten 20 der Rückwandabschnitt (Fig. 2) oder die Hülle 16 (Fig. 1) des in der Aufnahme 14 untergebrachten Warndreiecks sichtbar ist.

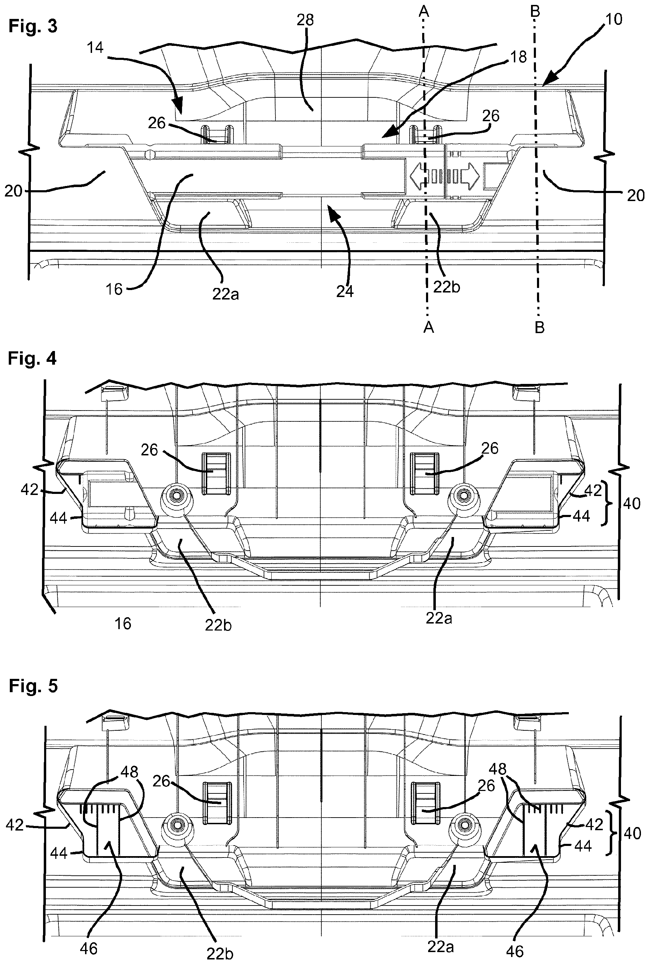

In Figur 3 ist eine Draufsicht auf das Verkleidungselement 10 mit der Aufnahme 14 und dem darin aufgenommenen Warndreieck 16 gezeigt. Die Blickrichtung entspricht der Längsrichtung X, wobei von innen auf eine (nicht dargestellte) Heckklappe geblickt wird, an der das Verkleidungselement 10 angebracht ist. In der Figur 3 sind bereits unter Bezugnahme auf die Figuren 1 und 2 beschriebene Komponenten mit den gleichen Bezugszeichen gekennzeichnet.

Die Figuren 4 und 5 zeigen das Verkleidungselement 10 von seiner Rückseite 38. Das heißt, die Blickrichtung ist von hinten auf das (noch) nicht in einer Heckklappe eingebaute Verkleidungselement 10. In Figur 4 ist die Hülle 16 des Warndreiecks in der Aufnahme 14 aufgenommen. In der Figur 5 ist die Aufnahme 14 ohne Hülle 16 gezeigt.

Aus den Darstellungen der Figuren 4 und 5 sind seitliche Zentrierelemente 40 ersichtlich. Die Zentrierelemente 40 weisen einen jeweiligen bezogen auf die Höhenrichtung Z geneigten Einführabschnitt 42 ab. Ferner schließt sich an den Einführabschnitt 42 ein jeweiliger im Wesentlichen vertikal bzw. parallel zur Höhenrichtung Z verlaufender Aufnahmeabschnitt 44 an. Die Einführabschnitte 42 sind dabei so ausgebildet, dass sie ein V-förmige bzw. trichterartige seitliche Führung für die Hülle 16 bilden. Entsprechend wird die Hülle 16 insbesondere beim Einsetzen in die Aufnahme 14 zwangszentriert und zwischen den beiden Aufnahmeabschnitte 44 klemmend beaufschlagt und gehalten.

Aus der Figur 5 ist ferner ersichtlich, dass an den der Aufnahme 14 zugewandten Seiten 46 der vorderen Begrenzungsabschnitte 20 rippenartige Vorsprünge 48 vorgesehen sein können. Anders ausgedrückt sind die rippenartigen Vorsprünge 48 an der Rückseite 46 der Begrenzungsabschnitte 20 angeordnet. Auch diese rippenartigen Vorsprünge 48 dienen dazu, die Klemmwirkung auf die in der Aufnahme 14 aufgenommene Hülle 16 zu verbessern. Dabei kann eine vollflächige Anlage der Hülle an den Begrenzungsabschnitten 20 vermieden werden, was sich günstig auf die beim Entnehmen der Hülle 16 aufzubringenden Kräfte auswirkt.

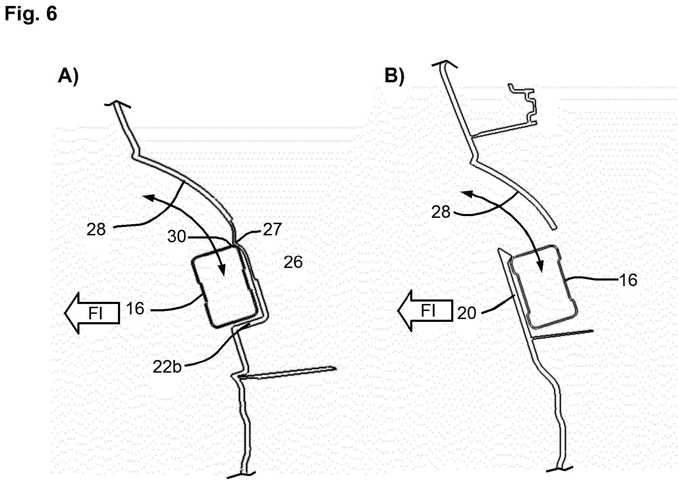

In der Figur 6 sind in den Teilfiguren A) und B) zwei vereinfachte Schnittdarstellungen entsprechend den Schnittlinien A-A bzw. B-B der Figur 3 gezeigt. Aus diesen Darstellungen ist der konkav zum Fahrzeuginneren (Pfeil FI) gebogene Führungsabschnitt 28 des Rückwandabschnitts 18 des Verkleidungselements 10 gut ersichtlich. Figur 6A zeigt ferner auch die klemmende Beaufschlagung des oberen Randes 30 der Hülle 16 durch das Klemmelement 26. Ferner ist auch der Auflageabschnitt 22 bzw. dessen Teilabschnitt 22b erkennbar. In Figur 6B ist der vordere Begrenzungsabschnitt 20 gezeigt, an dem die Hülle 16 anliegt. In den Figuren 6A und 6B ist ferner ein gebogener Doppelpfeil gezeigt, der das geführte Einsetzen bzw. Entnehmen der Hülle 16 in die bzw. aus der Aufnahme 14 illustriert.

Durch die in dem Verkleidungselement 10 vorgesehene Aufnahme 14 kann das Warndreieck in seiner Hülle sicher und sichtbar in einem Heckklappenbereich eines Kraftfahrzeugs untergebracht werden. Die Ausgestaltung der Aufnahme 14 mit dem gebogenen Rückwandabschnitt 18 (Führungsabschnitt 28) und der Griffmulde 24 ermöglicht eine einfache Entnahme des Warndreiecks in seiner Hülle 16, insbesondere bei geöffneter Heckklappe, wenn sich das Verkleidungselement 10 und somit die Hülle 16 üblicherweise im Wesentlichen Horizontal über Kopf angeordnet sind. Dies würde etwa einer Situation entsprechen, wenn man die Darstellungen der Figuren 6A und 6B um 90° gegen den Uhrzeigersinn drehen würde. Das Warndreieck lässt sich in der geöffneten Position der Heckklappe mit einer einfachen Bewegung eines Arms von hinten oben nach vorne unten aus der Aufnahme entfernen. Ferner ist die Aufnahme so ausgebildet, dass die Hülle 16 des Warndreiecks auch im verstauten Zustand in der Aufnahme 14 gut sichtbar ist, so dass das Warndreieck auch im Ausnahmezustand einer Panne oder einer Kollision schnell gefunden werden kann. Die Ausgestaltung der Aufnahme 14 ermöglicht ferner die klapperfrei und sicher Aufbewahrung des Warndreiecks in seiner Hülle 16, wobei weder zum Einsetzen der Hülle 16 noch zu deren Entnahme aus der Aufnahme 14 irgendwelche Elemente oder Werkzeuge betätigt bzw. verwendet werden müssen.

## Patentansprüche

1. Verkleidungselement für eine Heckklappe eines Kraftfahrzeugs, wobei in dem Verkleidungselement (10) eine zu einer Fahrzeuginnenseite (FI) offene Aufnahme (14) ausgebildet ist, in der ein in einer Hülle (16) aufgenommenes Warndreieck unterbringbar oder untergebracht ist, wobei die Aufnahme (14) aufweist:
einen Rückwandabschnitt (18) mit wenigstens einem elastischen Klemmelement (26);
zwei vordere Begrenzungsabschnitte (20);
einen Auflageabschnitt (22);
wobei das Klemmelement (26), die vorderen Begrenzungsabschnitte (20) und der Auflageabschnitt (22) derart ausgebildet sind, dass sie bei untergebrachtem Warndreieck mit der Hülle (16) formschlüssig oder/und kraftschlüssig in Verbindung stehen,
und wobei der Rückwandabschnitt (18) oberhalb des Klemmelements (26) einen zur Fahrzeuginnenseite (FI) konkav gebogenen Führungsabschnitt (28) aufweist, entlang dem die Hülle (16) des Warndreiecks in die Aufnahme (14) einführbar oder aus dieser entfernbar ist,
**dadurch gekennzeichnet, dass** die Aufnahme (14) zwei seitliche Zentrierelemente (40) aufweist, die jeweils einen bezogen auf eine Vertikalrichtung (Z) geneigten Einführabschnitt (42) und einen sich an den Einführabschnitt (42) anschließenden, im Wesentlichen in Vertikalrichtung (Z) verlaufenden Aufnahmeabschnitt (44) aufweisen.

2. Verkleidungselement nach Anspruch 1, **dadurch gekennzeichnet, dass** die beiden Einführabschnitte (42) so ausgebildet sind, dass sie eine V-förmige, insbesondere trichterartige, seitliche Führung für die Hülle (16) bilden.

3. Verkleidungselement nach Anspruch 1 oder 2, **dadurch gekennzeichnet, dass** der Auflageabschnitt (22) zwei seitliche, in einem Abstand voneinander angeordnete Teilabschnitte (22a, 22b) aufweist.

4. Verkleidungselement nach Anspruch 3, **dadurch gekennzeichnet, dass** der zwischen den beiden Teilabschnitten (22a, 22b) gebildete Abstand so ausgebildet ist, dass der Rückwandabschnitt (18) zwischen den beiden Teilabschnitten eine Griffmulde (24) bildet.

5. Verkleidungselement nach einem der vorhergehenden Ansprüche, **dadurch gekennzeichnet, dass** das Klemmelement (26) einstückig mit dem Rückwandabschnitt (18) ausgebildet ist, wobei zwischen dem Klemmelement (26) und dem Rückwandabschnitt (18) Übergangsbereiche (32) mit reduzierter Materialdicke angeordnet sind, derart, dass das Klemmelement (26) unter Verformung der Übergansabschnitte (32) relativ zum Rückwandabschnitt (18) beweglich ist.

6. Verkleidungselement nach einem der vorhergehenden Ansprüche, **dadurch gekennzeichnet, dass** die Aufnahme (14) zwei Klemmelemente (26) aufweist.

7. Verkleidungselement nach Anspruch 6 und nach Anspruch 3 oder 4, **dadurch gekennzeichnet, dass** jedes Klemmelement (26) oberhalb eines der beiden Teilabschnitte (22a, 22b) angeordnet ist.

8. Verkleidungselement nach einem der vorhergehenden Ansprüche, **dadurch gekennzeichnet, dass** die vorderen Begrenzungsabschnitte (20) seitlich an der Aufnahme (14) und mit einem Abstand zueinander angeordnet sind, derart, dass zwischen den beiden vorderen Begrenzungsabschnitten (20) der Rückwandabschnitt (18) oder die Hülle (16) des in der Aufnahme (14) untergebrachten Warndreiecks sichtbar ist.

9. Verkleidungselement nach einem der vorhergehenden Ansprüche, **dadurch gekennzeichnet, dass** die vorderen Begrenzungsabschnitte (20) auf ihrer der Hülle (16) des Warndreiecks zugewandten Aufnahmeinnenfläche (46) mehrere rippenartige Vorsprünge (48) aufweisen oder/und dass an dem Rückwandabschnitt (18) mehrere rippenartige Vorsprünge (36) ausgebildet sind oder/und dass an dem Auflageabschnitt (22) mehrere rippenartige Vorsprünge (34) ausgebildet sind.

10. Verkleidungselement nach einem der vorhergehenden Ansprüche, **dadurch gekennzeichnet, dass** das Klemmelement (26) einen Rastabschnitt (27) aufweist, der bei untergebrachtem Warndreieck mit der Hülle (16), insbesondere mit einem oberen Rand (30) der Hülle (16) in Eingriff bringbar ist oder in Eingriff steht.

11. Heckklappe für ein Kraftfahrzeug mit einem Verkleidungselement (10) nach einem der vorhergehenden Ansprüche.

12. Kraftfahrzeug mit einer Heckklappe nach Anspruch 11, wobei die in dem Verkleidungselement (10) vorgesehene Aufnahme (14) zur Fahrzeuginnenseite (FI) zugänglich ist.

## Claims

1. Trim element for a tailgate of a motor vehicle, wherein in the trim element (10) a receptacle (14) is formed which is open to a vehicle interior side (FI), in which receptacle a warning triangle accommodated in a cover (16) can be stored or is stored, wherein the receptacle (14) has:
a rear wall section (18) with at least one elastic clamping element (26);
two front delimiting sections (20);
a supporting section (22);
wherein the clamping element (26), the front delimiting sections (20) and the supporting section (22) are designed such that when the warning triangle is stored they are in form-fitting and/or force-fitting connection with the cover (16),
and wherein the rear wall section (18) has above the clamping element (26) a guiding section (28) curved concavely to the vehicle interior side (FI), along which guiding section the cover (16) of the warning triangle can be inserted into the receptacle (14) or removed from it,
**characterised in that** the receptacle (14) has two lateral centring elements (40) which have in each case one insertion section (42) inclined with respect to a vertical direction (Z) and a receiving section (44), joined to the insertion section (42), extending substantially in vertical direction (Z).

2. Trim element according to claim 1, **characterised in that** the two insertion sections (42) are designed such that they form a V-shaped, particularly funnel-shaped, lateral guide for the cover (16).

3. Trim element according to claim 1 or 2, **characterised in that** the supporting section (22) has two lateral partial sections (22a, 22b) arranged at a distance from one another.

4. Trim element according to claim 3, **characterised in that** the distance formed between the two partial sections (22a, 22b) is formed such that the rear wall section (18) forms a recessed grip (24) between the two partial sections.

5. Trim element according to any of the previous claims, **characterised in that** the clamping element (26) is formed integrally with the rear wall section (18), wherein between the clamping element (26) and the rear wall section (18) are arranged transition regions (32) with reduced material thickness, such that the clamping element (26) is movable relative to the rear wall portion (18) when the transition sections (32) deform.

6. Trim element according to any of the previous claims, **characterised in that** the receptacle (14) has two clamping elements (26).

7. Trim element according to claim 6 and according to claim 3 or 4, **characterised in that** each clamping element (26) is arranged above one of the two partial sections (22a, 22b).

8. Trim element according to any of the previous claims, **characterised in that** the front delimiting sections (20) are arranged laterally on the receptacle (14) and at a distance from one another, such that between the two front delimiting sections (20) the rear wall section (18) or the cover (16) of the warning triangle stored in the receptacle (14) is visible.

9. Trim element according to any of the previous claims, **characterised in that** the front delimiting sections (20) have several rib-like projections (48) on their receptacle inner surface (46) facing the cover (16) of the warning triangle, and/or that several rib-like projections (36) are formed on the rear wall section (18) or/and that several rib-like projections (34) are formed on the supporting section (22).

10. Trim element according to any of the previous claims, **characterised in that** the clamping element (26) has a latching section (27) which, when the warning triangle is stored with the cover (16), can be brought into engagement or is engagement with an upper edge (30) of the cover (16).

11. Tailgate for a motor vehicle with a trim element (10) according to any of the preceding claims.

12. Motor vehicle with a tailgate according to claim 11, wherein the receptacle (14) provided in the trim element (10) is accessible on the vehicle interior side (FI).

## Revendications

1. Élément d'habillage pour un hayon d'un véhicule automobile, dans lequel un logement (14) ouvert vers un côté intérieur de véhicule (FI) est réalisé dans l'élément d'habillage (10), dans lequel un triangle de signalisation reçu dans une enveloppe (16) peut être logé ou est logé, dans lequel le logement (14) présente :
une section de paroi arrière (18) avec au moins un élément de serrage (26) élastique,
deux sections de limitation (20) avant ;
une section d'appui (22) ;
dans lequel l'élément de serrage (26), les sections de limitation avant (20) et la section d'appui (22) sont réalisés manière à être en liaison par complémentarité de forme et/ou à force avec l'enveloppe (16) en cas de triangle de signalisation logé,
et dans lequel la section de paroi arrière (18) présente au-dessus de l'élément de serrage (26) une section de guidage (28) pliée de manière concave vers le côté intérieur de véhicule (FI), le long de laquelle l'enveloppe (16) du triangle de signalisation peut être introduite dans le logement (14) ou retirée de celui-ci,
**caractérisé en ce que** le logement (14) présente deux éléments de centrage (40) latéraux qui présentent respectivement une section d'introduction (42) inclinée par rapport à un sens vertical (Z) et une section de logement (44) contiguë à la section d'introduction (42), s'étendant sensiblement dans le sens vertical (Z).

2. Élément d'habillage selon la revendication 1, **caractérisé en ce que** les deux sections d'introduction (42) sont réalisées de sorte à former un guidage latéral en forme de V, en particulier de type entonnoir, pour l'enveloppe (16).

3. Élément d'habillage selon la revendication 1 ou 2, **caractérisé en ce que** la section d'appui (22) présente deux sections partielles (22a, 22b) latérales agencées à une distance l'une de l'autre.

4. Élément d'habillage selon la revendication 3, **caractérisé en ce que** la distance formée entre les deux sections partielles (22a, 22b) est réalisée de sorte que la section de paroi arrière (18) entre les deux sections partielles forme une poignée concave (24).

5. Élément d'habillage selon l'une quelconque des revendications précédentes, **caractérisé en ce que** l'élément de serrage (26) est réalisé d'un seul tenant avec la section de paroi arrière (18), dans lequel des zones de transition (32) avec une épaisseur de matériau réduite sont agencées entre l'élément de serrage (26) et la section de paroi arrière (18) de telle manière que l'élément de serrage (26) soit mobile en déformant les sections de transition (32) par rapport à la section de paroi arrière (18).

6. Élément d'habillage selon l'une quelconque des revendications précédentes, **caractérisé en ce que** le logement (14) présente deux éléments de serrage (26).

7. Élément d'habillage selon la revendication 6 et selon la revendication 3 ou 4, **caractérisé en ce que** chaque élément de serrage (26) est agencé au-dessus d'une des deux sections partielles (22a, 22b).

8. Élément d'habillage selon l'une quelconque des revendications précédentes, **caractérisé en ce que** les sections de limitation (20) avant sont agencées latéralement au niveau du logement (14) et à une distance l'une de l'autre de telle manière que la section de paroi arrière (18) ou l'enveloppe (16) du triangle de signalisation logé dans le logement (14) soit visible entre les deux sections de limitation (20) avant.

9. Élément d'habillage selon l'une quelconque des revendications précédentes, **caractérisé en ce que** les sections de limitation (20) avant sur leur surface intérieure de logement (46) tournée vers l'enveloppe (16) du triangle de signalisation présentent plusieurs saillies (48) nervurées et/ou que plusieurs saillies (36) nervurées sont réalisées au niveau de la section de paroi arrière (18) et/ou que plusieurs saillies (34) nervurées sont réalisées au niveau de la section d'appui (22).

10. Élément d'habillage selon l'une quelconque des revendications précédentes, **caractérisé en ce que** l'élément de serrage (26) présente une section d'encliquetage (27) qui est en prise ou peut être mise en prise en cas de triangle de signalisation logé avec l'enveloppe (16), en particulier avec un bord supérieur (30) de l'enveloppe (16).

11. Hayon pour un véhicule automobile avec un élément d'habillage (10) selon l'une quelconque des revendications précédentes.

12. Véhicule automobile avec un hayon selon la revendication 11, dans lequel le logement (14) prévu dans l'élément d'habillage (10) est accessible vers le côté intérieur de véhicule (FI).
